Europäisches Patentamt

European Patent Office

Office européen des brevets

(19)

(11) Veröffentlichungsnummer : **0 173 076
B1**

(12) **EUROPÄISCHE PATENTSCHRIFT**

(45) Veröffentlichungstag der Patentschrift :
19.10.88

(51) Int. Cl.⁴ : **H 02 M   1/088**

(21) Anmeldenummer : 85109300.5

(22) Anmeldetag : 24.07.85

(54) **Einrichtung zum Überwachen von Thyristoren.**

(30) Priorität : 07.08.84 DE 3429070

(43) Veröffentlichungstag der Anmeldung :
05.03.86 Patentblatt 86/10

(45) Bekanntmachung des Hinweises auf die Patenterteilung : 19.10.88 Patentblatt 88/42

(84) Benannte Vertragsstaaten :
**AT CH DE FR GB LI SE**

(56) Entgegenhaltungen :
**DE-A- 2 552 414
GB-A- 1 549 405
US-A- 3 842 337**
. **Die Akte enthält technische Angaben, die nach dem
Eingang der Anmeldung eingereicht wurden und die
nicht in dieser Patentschrift enthalten sind.**

(73) Patentinhaber : **Siemens Aktiengesellschaft Berlin
und München
Wittelsbacherplatz 2
D-8000 München 2 (DE)**

(72) Erfinder : **Tu, Quoc-Buu, Dipl.-Ing.
Budapester Strasse 20
D-8520 Erlangen (DE)**

Jouve, 18, rue St-Denis, 75001 Paris, France

## Beschreibung

Die Erfindung bezieht sich auf eine Einrichtung zum Überwachen des Betriebszustandes von mit dem Vorliegen von Steuersignalen einer Steuereinrichtung zündbaren Thyristoren, wobei die Zündenergie für die Zündsignale jedes Thyristors durch jeweils eine diesem zugeordnete, die Sperrspannung am jeweiligen Thyristor ausnutzende Zündschaltung generierbar ist, wobei durch jedes mit dem Steuersignal korrespondierende Zündsignal ein Rückmeldesignal auslösbar ist und wobei jedem Thyristor jeweils eine Schutzzündeinrichtung zugeordnet ist.

Eine derartige Einrichtung ist als Aufsatz « HGÜ-Ventilentwicklung » in etz Bd. 102 (1981), Heft 25, Seiten 1339 bis 1342 beschrieben. Die Einrichtung zur Thyristorüberwachung ist dabei für periodischen Betrieb ausgebildet.

Aus der DE-A-2 552 414 ist ein Verfahren zum Betrieb einer Überwachungsanordnung für ein aus n seriengeschalteten Thyristoren bestehendes Ventil bekannt, die aus n jeweils einem Thyristor zugeordneten Funktionseinheiten besteht. Jede Funktionseinheit umfaßt einen triggerbaren Impulsgeber, eine nachgeschaltete Ansteuereinheit und eine der Ansteuereinheit nachgeschaltete Überwachungseinheit, wobei der Impulsgeber für die simultane Abgabe von Zündimpulsen für den zugeordneten Thyristor und von Zählimpulsen sowie für die Abgabe von Rückstellsignalen vorgesehen ist. Die Ansteuereinheit umfaßt einen die Zählimpulse erfassenden Impulszähler mit Rückstelleingang, einen eine Zahl als Adresse der Funktionseinheit enthaltenden Adreßspeicher und ein Vergleichsglied, das bei übereinstimmendem Inhalt von Impulszähler und Adreßspeicher ausgangsseitig an die Überwachungseinheit ein Ansteuersignal abgibt. Die Überwachungseinheit liefert bei Ansteuerung und im Ansteuerungszeitraum eingehenden Meldesignal, das das einwandfreie Zünden des zugehörigen Thyristors bestätigt, ein Rückmeldesignal, wobei die Rückmeldesignalausgänge aller Funktionseinheiten einen gemeinsamen Sensor mit nachgeschalteter Auswerteeinheit zugeführt sind. Alle Impulsgeber werden durch simultane Triggerimpulse gesteuert, wobei jeweils nach einer Anzahl von n Triggerimpulsen alle Impulszähler ein Rückstellsignal erhalten, das nach n + 1 Triggerimpulsen abgegeben wird. Somit wird mit Hilfe dieser Überwachungsanordnung für ein aus n seriengeschalteten Thyristoren bestehendes Ventil bei periodischem Betrieb pro Netzperiode ein Kanal, bestehend aus einem Thyristor, abgefragt, wodurch die Zeitspanne eines Abfragezyklus, insbesondere bei Anlagen mit einer hohen Anzahl von seriell geschalteten Thyristoren, lang ist.

Aufgabe der Erfindung ist es, eine Einrichtung der eingangs genannten Art so auszubilden, daß auch bei nicht periodischem Betrieb Aussagen über auftretende Fehler getroffen werden können, wobei die Zeitspanne eines Abfragezyklus sich auf eine Netzperiode verkürzt.

Diese Aufgabe wird dadurch gelöst, daß die Rückmeldesignale von jeweils mindestens zwei beim Vorliegen eines jeweils zugehörigen Steuersignals zündbaren parallelgeschalteten Thyristoren in paralleler Form einer Speicheranordnung zuführbar sind, durch welche die zu vergleichenden Rückmeldesignale einem Detektor seriell zuführbar sind, durch den bei Ausfall der Rückmeldesignale ein den Ausfall der Zündenergie anzeigendes erstes Kennsignal auslösbar ist, durch den bei Ausfall des Rückmeldesignals eines der Thyristoren ein das Ansprechen der diesem zugeordneten Schutzzündeinrichtung anzeigendes zweites Kennsignal auslösbar ist und durch den beim Vorliegen sämtlicher Rückmeldesignale ein den ordnungsgemäßen Betrieb anzeigendes drittes Kennsignal auslösbar ist, und daß eine Speicheranordnung und der Detektor mit einem Taktgeber verknüpft sind, dessen Taktsignale den Detektor steuern. Die Einrichtung gemäß der Erfindung ist damit stets auf Anwendungsfälle zu beziehen, bei denen das Betriebsverhalten von mindestens zwei gleich oder gegensinnig parallelgeschalteten Thyristoren miteinander verglichen werden kann. Außerdem kann eine Vielzahl von Thyristoren mit Hilfe eines einzigen Detektors überwacht werden.

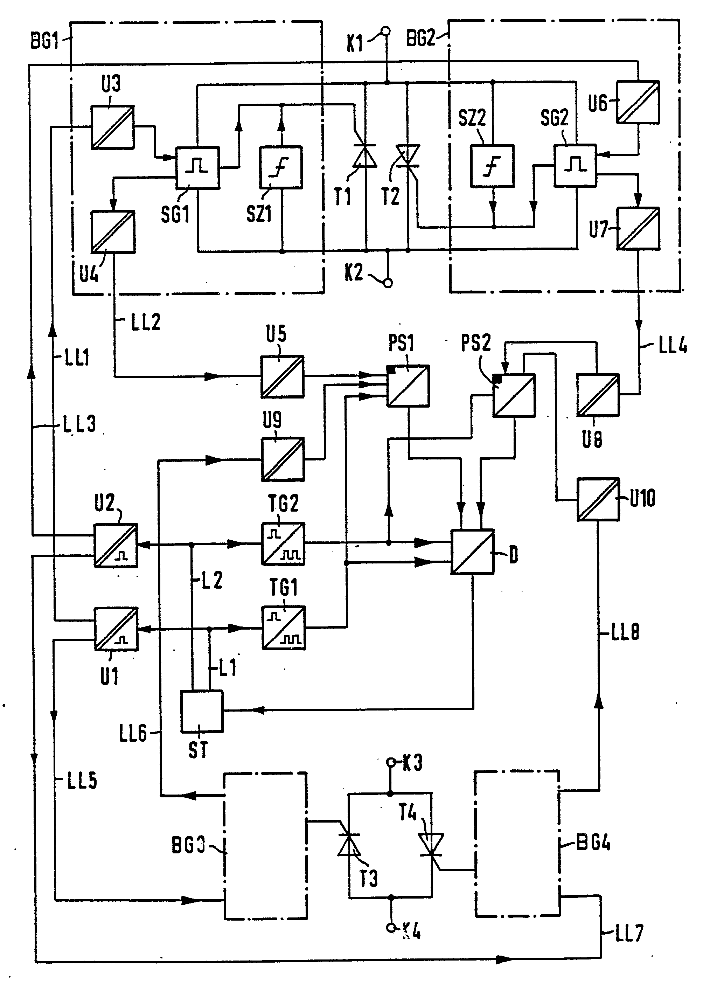

Ein Ausführungsbeispiel der Erfindung ist in der Zeichnung dargestellt und wird im folgenden näher erläutert.

Die Darstellung zeigt eine erste Gruppe von Thyristoren T1 und T2, die zwischen zwei Klemmen K1 und K2 antiparallel geschaltet sind und eine zweite Gruppe von Thyristoren T3 und T4, die zwischen zwei Klemmen K3 und K4 ebenfalls antiparallel geschaltet sind.

Es sei angenommen, daß die Thyristoren T1 und T3 bzw. T2 und T4 abwechselnd jeweils auf Veranlassung einer Steuereinrichtung ST gleichzeitig gezündet werden sollen. Dazu wird über eine Leitung L1 von der Steuereinrichtung ST ein Steuersignal an einen galvanisch trennenden Umsetzer U1 geleitet, der dieses elektrische Steuersignal in ein optisches Steuersignal umformt und über einen Lichtwellenleiter LL1 einer gestrichelt angedeuteten, dem Thyristor T1 zugeordneten Baugruppe BG1 zuleitet, in welcher ein ebenfalls galvanisch trennender Umsetzer U3 das optische Steuersignal in ein elektrisches Steuersignal rückumsetzt, das einem Steuerimpulsgeber SG1 zugeleitet wird.

Der Steuerimpulsgeber SG1 wird über die Klemmen K1 und K2 während der Sperrzeiten der Thyristoren T1 und T2 mit Energie versorgt und generiert mit Hilfe dieser Energie beim Vorliegen eines Steuersignals ein Zündsignal für den Thyristor T1. Dieses Zündsignal wird dem Steuereingang des Thyristors T1 vom Steuerimpulsgeber SG1 zugeführt. Das Vorliegen eines Zündsignals wird vom Steuerimpulsgeber SG1 jedoch auch einem galvanisch trennenden Umsetzer U4 gemeldet, der ein entsprechendes optisches Rückmeldesignal auslöst und über einen Lichtwellenleiter LL2 einem galvanisch trennenden Umsetzer U5 zuleitet, durch den das optische Rückmeldesignal in ein elektrisches Rückmeldesignal umgeformt wird. Dieses wird in einem Parallel-Serien-Umsetzer PS1 gespeichert. Auf die weitere Verarbeitung des gespeicherten Rückmeldesignals wird im folgenden noch eingegangen werden.

Dem Thyristor T1 ist zwischen Steuereingang und Anode ein Schutzzündkreis SZ1 zugeordnet, der beim Überschreiten einer maximal zulässigen Spannung zwischen den Klemmen K1 und K2 eine Zündung des Thyristors T1 veranlaßt, ohne daß dazu ein Zündimpuls seitens des Steuerimpulsgebers SG1 erforderlich ist.

Über den Lichtwellenleiter LL3 gelangt jedes in einem Umsetzer U2 optisch umgesetzte Steuersignal von einer Leitung L2 der Steuereinrichtung ST an eine ebenfalls gestrichelt angedeutete Baugruppe BG2, die dem Thyristor T2 zugeordnet ist. Die Baugruppe BG2 entspricht dabei in ihrem Aufbau völlig der Baugruppe BG1. Das Steuersignal vom Lichtwellenleiter LL3 wird daher in einem Umsetzer U6 wieder in ein elektrisches Steuersignal umgeformt und dieses elektrische Steuersignal löst mit Hilfe eines Steuerimpulsgebers SG2 ein Zündsignal aus. Die Energie für den Zündimpulsgeber SG2 wird den Klemmen K1 und K2 entnommen. Das Auslösen eines Zündsignals wird einem Umsetzer U7 gemeldet, der ein dementsprechendes optisches Rückmeldesignal über einen Lichtwellenleiter LL4 an einem Umsetzer U8 übermittelt. Dieser formt das optische Rückmeldesignal in ein elektrisches Rückmeldesignal um und führt dieses einem Parallel-Serien-Umsetzer PS2 zu, auf dessen Funktion im folgenden noch eingegangen wird.

Dem Steuereingang und der Anode des Thyristors T2 ist ein Schutzzündkreis SZ2 zugeordnet, der beim Überschreiten einer maximal zulässigen Spannung zwischen den Klemmen K1 und K2 eine Schutzzündung des Thyristors T2 auslöst.

Die den Thyristoren T3 und T4 zugeordneten Baugruppen BG3 und BG4 sind ebenfalls gestrichelt angedeutet, auf die einzelnen Elemente dieser Baugruppen BG3 und BG4 wird jedoch nicht weiter eingegangen, da diese identisch wie diejenigen der Baugruppen BG1 und BG2 ausgebildet sind.

Die Baugruppe BG3 ist dabei über einen Lichtwellenleiter LL5 mit dem Umsetzer U1 verbunden, der der Baugruppe BG3 gleichzeitig wie der Baugruppe BG1 Steuersignale der Steuereinrichtung ST übermittelt. Über einen Lichtwellenleiter LL6 und einem Umsetzer U9 wird ein optisches Rückmeldesignal der Baugruppe BG3 als elektrisches Rückmeldesignal an den Parallel-Serien-Umsetzer PS1 gemeldet.

In entsprechender Weise ist die Baugruppe BG4 über einen das Steuersignal führenden Lichtwellenleiter LL7 mit dem Umsetzer U2 und einem das optische Rückmeldesignal leitendem Lichtwellenleiter LL8 verbunden. Über einen galvanisch trennenden Umsetzer U10 wird das optische Rückmeldesignal in ein elektrisches Rückmeldesignal umgeformt, das dem Parallel-Serien-Umsetzer PS2 eingeprägt wird.

Mit dem Auslösen eines Steuersignals auf der Leitung L1 bzw. L2 seitens der Steuereinrichtung ST wird ein Taktgeber TG1 bzw. ein Taktgeber TG2 wirksamgeschaltet, der jeweils eine Anzahl von Taktimpulsen auslöst, die jeweils den Vergleich elektischer Rückmeldesignale der Thyristoren T1 und T2 bzw. T3 und T4 in einem Detektor D ermöglicht. Der Detektor D ist dazu mit den Ausgängen der Parallel-Serien-Umsetzer PS1 und PS2 verbunden. Ferner werden die Taktimpulse der Taktgeber TG1 und TG2 dem Detektor D übermittelt, so daß im Detektor D stets erkennbar ist, von welcher Gruppe von Thyristoren T1 und T2 bzw. T3 und T4 jeweils ein Rückmeldesignal aus dem Parallel-Serien-Umsetzer PS1 bzw. PS2 abgefragt wird. Im Ausführungsbeispiel sind der Übersichtlichkeit nur zwei Gruppen von jeweils zwei zu vergleichenden Thyristoren vorgesehen. Demgemäß wären durch die Taktgeber TG1 bzw. TG2 zwischen unmittelbar aufeinanderfolgenden Steuersignalen jeweils zwei Taktimpulse auszulösen. Ein Vorliegen von n Gruppen von Thyristoren würde n Taktimpulse bedingen. Die Taktimpulse der Taktgeber TG1 bzw. TG2 dienen auch als Takte für die Parallel-Serien-Umsetzung durch die Parallel-Serien-Umsetzer PS1 und PS2.

Mit dem Vorliegen des jeweils ersten Taktimpulses des Taktimpulsgebers TG1 bzw. TG2 wird festgestellt, ob von den Thyristoren T1 und T2 Rückmeldesignale eingetroffen sind. Sofern keine Rückmeldesignale von beiden Thyristoren T1 und T2 eingetroffen sind, weist dies auf einen Kurzschluß zwischen den Klemmen K1 und K2 hin. Ein dementsprechendes erstes Kennsignal wird dann seitens des Detektors D an die Steuereinrichtung ST übermittelt.

Sofern nur eines der Rückmeldesignale entweder des Thyristors T1 oder des Thyristors T2 vorliegt, kann geschlossen werden, daß die Schutzzündeinrichtung SZ2 bzw. SZ1 angesprochen hat oder daß ein Rückmeldekanal unterbrochen ist. Ein entsprechendes zweites Kennsignal wird dann seitens des Detektors D der Steuereinrichtung ST übermittelt.

Während des jeweils zweiten Taktes der Taktgeber TG1 und TG2 werden über die Ausgänge der Parallel-Serien-Umsetzer PS1 bzw. PS2 die Rückmeldesignale der Thyristoren T3 und T4 dem Detektor D zugeführt und die eben geschilderten Aussagen werden für die Thyristoren T3 und T4 seitens des Detektors D getroffen und als erstes, zweites oder drittes Kennsignal der Steuereinrichtung ST zugeleitet.

Die Überwachung des Betriebszustandes der Thyristoren T1 bis T4 ist zum einen während des betriebsmäßigen Schaltens der Thyristoren möglich, es ist jedoch auch denkbar, daß dann, wenn zwischen den Klemmen K1 und K2 bzw. K3 und K4 keine oder nur eine äußerst geringe negative Spannung vorliegt, ein Steuersignal von der Steuereinrichtung ST abgegeben wird. Ein solches Steuersignal wird nicht zu Schaltvorgängen der Thyristoren T1 und T3 bzw. T2 und T4 führen, jedoch würde eine Betriebsüberwachung dadurch erreicht, daß hierbei getestet werden könnte, ob ein ordnungsgemäßes Auslösen von Zündsignalen seitens der Steuerimpulsgeber SG1 und SG2 erfolgt.

## Patentanspruch

Einrichtung zum Überwachen des Betriebszustandes von mit dem Vorliegen von Steuersignalen einer Steuereinrichtung zündbaren Thyristoren, wobei die Zündenergie für die Zündsignale jedes Thyristors durch jeweils eine diesem zugeordnete, die Sperrspannung am jeweiligen Thyristor ausnutzende Zündschaltung (SG1, SG2) generierbar ist, wobei durch jedes mit dem Steuersignal korrespondierende Zündsignal ein Rückmeldesignal auslösbar ist und wobei jedem Thyristor jeweils eine Schutzzündeinrichtung (SZ1, SZ2) zugeordnet ist, dadurch gekennzeichnet, daß die Rückmeldesignale von jeweils mindestens zwei beim Vorliegen eines jeweils zugehörigen Steuersignals zündbaren parallelgeschalteten Thyristoren (T1, T2 bzw. T3, T4) in paralleler Form einer Speicheranordnung (PS1, PS2) zuführbar sind, durch welche die zu vergleichenden Rückmeldesignale einem Detektor (D) seriell zuführbar sind, durch den bei Ausfall der Rückmeldesignale ein den Ausfall der Zündenergie anzeigendes erstes Kennsignal auslösbar ist, durch den bei Ausfall des Rückmeldesignals eines der Thyristoren (T1 bis T4) ein das Ansprechen der diesem zugeordneten Schutzzündeinrichtung (SZ1, SZ2) anzeigendes zweites Kennsignal auslösbar ist und durch den beim Vorliegen sämtlicher Rückmeldesignale ein den ordnungsgemäßen Betrieb anzeigendes drittes Kennsignal auslösbar ist, und daß eine Speicheranordnung (PS1, PS2) und der Detektor (D) mit einem Taktgeber (TG1, TG2) verknüpft sind, dessen Taktsignale den Detektor (D) steuern.

## Claim

Device for monitoring the operating state of thyristors which can be fired with the presence of control signals of a control device, wherein the firing power for the firing signals of each thyristor can be generated by, in each case, a firing circuit (SG1, SG2) which is assigned to the latter and which utilizes the blocking voltage at the respective thyristor, wherein a feedback signal can be released by each firing signal corresponding with the control signal and wherein a protective firing device (SZ1, SZ2) is assigned, in each case, to each thyristor, characterised in that the feedback signals of, in each case, at least two parallel-connected thyristors (T1, T2 or T3, T4), which can be fired with the presence of an, in each case, pertinent control signal, can be supplied in parallel form to a storage arrangement (PS1, PS2) by means of which the feedback signals to be compared can be supplied serially to a detector (D), by means of which : in the event of failure of the feedback signals, a first identifying signal, which indicates the failure of the firing power, can be released ; through which, in the event of failure of the feedback signal of one of the thyristors (T1 to T4), a second identifying signal, which indicates the response of the protective firing device (SZ1, SZ2) assigned to the latter, i. e. said one of the thyristors, can be released ; and through which, with the presence of all the feedback signals, a third identifying signal, which indicates the correct operation, can be released ; and in that a storage arrangement (PS1, PS2) and the detector (D) are linked with a clock unit (TG1, TG2), the clock signals of which control the detector (D).

## Revendication

Dispositif pour surveiller le régime de thyristors amorçables, par la présence de signaux de commande d'un dispositif de commande, l'énergie d'amorçage pour les signaux d'amorçage de chaque thyristor pouvant être générée chaque fois par un circuit d'amorçage (SG1, SG2) qui est conjugué à celui-ci et qui utilise la tension de blocage du thyristor correspondant, un signal de réplique pouvant être déclenché par chaque signal d'amorçage qui correspond au signal de commande, et un dispositif d'amorçage de protection (SZ1, SZ2) étant conjugué à chaque thyristor, caractérisé par le fait que les signaux de réplique de respectivement au moins deux thyristors (T1, T2, respectivement T3, T4) montés en parallèle et amorçables à la présence d'un signal de commande affecté à chacun d'eux, peuvent être appliqués en parallèle, à un dispositif à mémoire (PS1, PS2), au moyen duquel les signaux de réplique à comparer peuvent être appliqués en série à un détecteur (D), au moyen duquel, dans le cas de la défaillance des signaux de réplique, un premier signal d'identification indiquant la défaillance de l'énergie d'amorçage est susceptible d'être déclenché, au moyen duquel, dans le cas de la défaillance du signal de réplique de l'un des thyristors (T1 à T4) un deuxième signal d'identification, indiquant la réponse du dispositif d'amorçage de sécurité (SZ1, SZ2) conjugué audit thyristor, est susceptible d'être déclenché, et au moyen duquel, dans le cas de la présence de tous les signaux de réplique, un troisième signal d'identification indiquant le fonctionnement ordonné est susceptible d'être déclenché, et par le fait qu'un dispositif à mémoire (PS1, PS2) et le détecteur (D) sont liés à une horloge (TG1, TG2), dont les signaux de synchronisation commandent le détecteur (D).

0 173 076